# FASCICULE DE BREVET EUROPEEN

(11) **EP 1 144 111 B1**
(45) Date de publication et mention de la délivrance du brevet: **28.08.2002**
(21) Numéro de dépôt: 99957801.6
(22) Date de dépôt: 03.12.1999
(51) Int. Cl.: B01J 25/00, B01J 37/06, H01M 4/90, H01M 4/92, B22F 9/16

(54) **PROCEDE DE FABRICATION D'UN CATALYSEUR SUPPORTE**
VERFAHREN ZUR HERSTELLUNG EINES TRÄGERKATALYSATORS
METHOD FOR MAKING A SUPPORTED CATALYST

(30) Priorité: 22.12.1998 US 218138
(43) Date de publication de la demande: 17.10.2001
(73) Titulaire: HYDRO-QUEBEC, Montréal Québec H2Z 1A4 (CA)
(72) Inventeur: SCHULZ, Robert, Sainte-Julie, Québec J0L 2S0 (CA); LALANDE, Guy, Montréal, Québec H2J 3L3 (CA); DENIS, Marie-Chantal, Montréal, Québec H3J 2M7 (CA); DODELET, Jean-Pol, Sainte-Julie, Québec J0L 2S0 (CA)
(74) Mandataire: Leszczynski, André
(86) Numéro de dépôt international: CA9901165
(87) Numéro de publication internationale: WO00037173

(56) Documents cités:
- WO-A-98/32885
- US-A- 3 617 389
- LALANDE G ET AL.: "Utilization of the ball milling technique in the synthesis of electrocatalysts for H2 oxidation in polymer electrolyte fuel cells" , PROC. 2ND INTERNAT. SYMP. ON NEW MATERIALS FOR FUEL CELLS AND MODERN BATTERY SYSTEMS, MONTREAL , CANADA, 6-10 JULY 1997. (SAVADOGO AND ROBERGE (EDS.)). ISBN 2-553-00624-1. ECOLE POLYTECH. , MONTREAL, CANADA, P.720-731. XP000892821 abrégé page 724 -page 725
- SCHULTZ R ET AL.: "A novel method to produce nanocrystalline metastable supported catalysts" CATALYSIS LETTERS, vol. 35, 1995, pages 89-106, XP002134456 cité dans la demande
- SCHULTZ R ET AL.: "Porous Nanocrystalline Alloys Prepared by High Energy Ball Milling" MATERIALS SCIENCE FORUM, ISSN 0255-5476, vol. 269-272, 1998, pages 1055-1059, XP000892800
- KHUTORETSKAYA G M ET AL.: "Supported Raney Catalysts. I. Raney Pt-Cu/Al2O3 Catalysts" KINETICS AND CATALYSIS, vol. 28, avril 1987 (1987-04), pages 409-414, XP000901049

## Description

### Domaine de l'invention

La présente invention a pour objet un procédé de fabrication de catalyseurs supportés de structure nanocristalline et de grande surface spécifique, lequel procédé fait appel à une technique de broyage mécanique intense couplée à une technique de lixiviation.

L'invention a également pour objet les catalyseurs supportés ainsi préparés.

L'invention a enfin pour objet l'usage des catalyseurs supportés selon l'invention comme électrocatalyseurs dans des piles à combustible ou dans des électrolyseurs.

### Brève description de l'art antérieur

Les catalyseurs dits de Raney sont connus depuis déjà très longtemps. Ainsi, le brevet américain no 1.628.190 délivré le 10 mai 1927 au nom de Murray RANEY décrit un procédé pour produire une poudre finement divisée de Ni en faisant fondre ensemble un mélange de Ni, Al et Si. Al et Si sont ensuite dissous en traitant l'alliage avec une solution caustique, qui ne laisse que le Ni poreux ou très finement divisé.

Certains chercheurs ont également déjà suggéré de coupler le procédé de Raney à une technique du broyage mécanique intense pour générer du Ni poreux. Ainsi, par exemple, dans l'article publié dans la revue *J. Alloys and Compounds,* Vol. 185 (1992), pages 25-34, un alliage de Ni₃₅Al₆₅ est créé par broyage mécanique, et cet alliage est ensuite soumis à une solution de 20% KOH pour en dissoudre l'Al.

Dans la demande de brevet européen publiée EP-0.734.765-Al (1996), il fait état de l'utilisation du procédé décrit ci-dessus pour la fabrication d'alliages autres que seulement ceux à base de Ni. De fait, dans cette demande, la formule de l'alliage fabriquée par broyage mécanique est Al-Me-X où Me est un métal choisi dans le groupe constitué par Ni, Co, Fe, Cu, Pd et Ag; et X est différent de Me et comprend au moins un métal choisi dans le groupe constitué par Ag, Co, Pt, Ti, V, Cr, Fe, Cu, Zn, Ge, W, Re, Os, Ir, Au, Zr, Nb, Mo, Ru, Rh, Pd, Cd, In, Sn et Sb. Une fois l'alliage préparé, on dissout ensuite l'Al.

Tous ces procédés de fabrication utilisent des systèmes entièrement métalliques, ce qui engendre quelques problèmes en ce qui a trait au broyage mécanique. En effet, les métaux ont une nette tendance à effectuer des soudures à froid durant le broyage, dû à la création de surfaces métalliques fraîches au cours de l'opération. Il devient alors difficile d'une part, d'opérer le broyeur sans avoir des problèmes de collage et d'autre part, minimiser l'agrégation des cristallites entre elles dans le but évident de faciliter leur séparation et d'augmenter la surface spécifique du produit final. Ainsi, il est avantageux d'utiliser comme matériau de départ au moins un composé non métallique. Ce composé peut être, par exemple, un oxyde métallique. Il peut faire partie de la composante catalytique ou de la partie lixiviable.

Dans la demande de brevet internationale publiée no WO 98/32885 au nom de la Demanderesse, il est décrit un procédé de fabrication de matériaux nanocristallins à haute surface spécifique. Ce procédé comprend une première étape consistant à mélanger les éléments de l'alliage désiré à d'autres éléments agissant comme agent de dispersion. Tous ces éléments sont traités ensemble par broyage mécanique intense, par trempe rapide à partir de l'état liquide ou par une méthode alternative pertinente, afin de générer un matériau nanocristallin. Dans une seconde étape, le matériau nanocristallin obtenu est soumis à une étape de lixiviation où l'agent de dispersion est dissous totalement ou partiellement dans une solution de lixiviation. Le produit résultant garde donc sa nature nanocristalline mais possède une grande porosité due à la dissolution de l'agent de dispersion. Ainsi, la surface spécifique s'accroît alors considérablement et permet d'augmenter les propriétés catalytiques pour une quantité de matériau équivalente.

Il est important de comprendre que la morphologie du matériau résultant est similaire à une éponge avec des pores nanométriques. En catalyse, les espèces impliquées (gaz ou ions solvatés) lors d'une réaction chimique doivent séjourner un certain temps à la surface du catalyseur pour que l'effet recherché de ce dernier puisse opérer. Ainsi, la quantité d'espèces qui réagira en fonction du temps, donc la vitesse de réaction, sera directement reliée à la surface disponible de catalyseur. Or, cette surface disponible est largement accrue si on utilise une éponge nanométrique. Par contre, il faut également que les espèces puissent atteindre ou quitter (selon la réaction chimique) rapidement ces surfaces catalytiques. Cela est un problème si celles-ci doivent voyager longtemps dans les canaux nanométriques de l'éponge pour se rendre aux surfaces situées à l'intérieur de l'éponge. En fait, il est fort probable que ces surfaces ne soient que peu utilisées si la vitesse de transport des espèces est plus lente par rapport à la vitesse de réaction chimique désirée. Ainsi, une bonne partie du matériau, i.e. le coeur de l'éponge, pourrait ne servir que très peu à la catalyse. Dans le cas où le matériau utilise des métaux nobles tels que le Pt ou le Pd, il devient avantageux de fragmenter ces éponges et d'en disperser les morceaux sur un support afin d'en maximiser l'utilisation et donc de diminuer les coûts et la quantité de métaux nobles.

### Résumé de l'invention

La présente invention propose une solution au problème ci-dessus évoqué.

Plus précisément, elle propose un procédé où durant la procédure de fabrication (synthèse) du matériau nanocristallin, on inclut des composés aux éléments chimiques insolubles à la lixiviation et ne servant pas principalement à la catalyse, et sur lesquels les composés ou éléments catalytiques pourront se fixer. Par exemple, un broyage mécanique intense de Pt+Ru+MgO peut être effectué, et ce mélange broyé peut ensuite être broyé une seconde fois avec une quantité significative de noir de carbone. La lixiviation est ensuite effectuée et un catalyseur de Pt-Ru supporté sur du noir de carbone en résulte. Ce support qui, dans l'exemple donné, est du noir de carbone, peut aussi être inclus à une autre étape de la procédure, par exemple à la lixiviation. Dans ce cas, on effectuera le broyage de Pt+Ru+MgO puis on procédera à la lixiviation dans une solution contenant une quantité suffisante de noir de carbone, sur lequel ira se déposer le Pt-Ru, la composante MgO étant dissoute lors de la lixiviation.

Une telle utilisation d'un composé ou élément chimique non lixiviable permet de séparer davantage les particules et les nanocristaux et par conséquent d'augmenter la surface active du catalyseur. Ainsi, le procédé selon l'invention permet de diminuer la quantité de l'espèce ayant la fonction de catalyseur, qui, souvent, est coûteux.

L'invention telle que revendiquée ci-après a ainsi pour premier objet un procédé de fabrication d'un catalyseur supporté de structure nanocristalline et de grande surface spécifique dans lequel:
- dans une première étape, on prépare un matériau nanocristallin constitué d'un composite ou alliage métastable d'au moins deux composés ou éléments chimiques distincts contenant au moins une espèce catalytique, le matériau ainsi préparé ayant une structure nanocristalline avec des cristaux de taille inférieure à 100 nm; et
- dans une seconde étape, on soumet le matériau nanocristallin à une lixiviation au moyen d'une solution dite de lixiviation de façon à éliminer partiellement ou totalement au moins un des composés ou éléments du matériau, autre que la ou les espèces catalytiques,
caractérisé en ce que au moins un composé ou élément chimique non lixiviable servant de support à l'espèce catalytique est ajouté au matériau à la première étape ou à la solution de lixiviation à la seconde étape.

Ce procédé permet d'obtenir un catalyseur supporté se présentant sous la forme d'un nanocomposite, d'une solution solide, d'un intermétallique ou d'une combinaison de ceux-ci selon les cas, avec une structure nanocristalline et une grande surface spécifique habituellement supérieure à 2 m²/g.

L'invention telle que revendiquée a pour second objet un tel catalyseur supporté. Les catalyseurs ainsi produits peuvent être utilisés comme électrocatalyseurs dans les électrolyseurs ou servir à la fabrication d'électrodes pour pile à combustible à électrolyte acide. Plus spécifiquement, ces matériaux peuvent être appliqués dans les piles à combustible à électrolyte polymérique solide. Ces piles sont de très bons candidats comme source d'énergie électrique autonome pour les applications stationnaires et mobiles.

L'invention telle que revendiquée a donc pour troisième objet l'usage de ce catalyseur supporté de structure nanocristalline et de surface spécifique supérieure à 2 m²/g comme électrocatalyseur dans une pile à combustible.

L'invention permet de fabriquer des catalyseurs complexes et dont les performances sont comparables sinon meilleures que celles offertes par les catalyseurs déjà commercialement disponibles. L'invention permet notamment la fabrication de catalyseurs supportés très complexes, ce que les procédés conventionnels de synthèse permettent difficilement de faire. Elle permet entre autres l'élaboration d'électrocatalyseurs tolérants au CO ou des électrocatalyseurs pour les piles à oxydation direct du méthanol.

L'invention, sa mise en oeuvre et ses avantages seront mieux compris à la lecture de la description détaillée et non limitative qui va suivre, faite en se référant aux exemples donnés et aux dessins annexés.

### Brève description des dessins

La figure la est un diagramme de diffraction X illustrant les pics de Pt et Ru d'un catalyseur à base de Pt et Ru préparé tel que décrit dans l'exemple comparatif 1 et ceux d'un catalyseur du même type supporté sur du noir de carbone et préparé tel que décrit dans l'exemple 3.

La figure 1b est un diagramme de diffraction X illustrant les pics de Pt et Ru d'un catalyseur à base de Pt et Ru supporté sur du noir de carbone et préparé tel que décrit dans l'exemple comparatif 2 et ceux d'un catalyseur du même type supporté sur du noir de carbone et préparé tel que décrit dans l'exemple 3.

La figure 2 est un diagramme de diffraction X illustrant les pics de Pt et Ru d'un catalyseur à base de Pt et Ru préparé tel que décrit dans l'exemple comparatif 1 et ceux d'un catalyseur du même type supporté sur du WO₃ et préparé tel que décrit dans l'exemple 5.

La figure 3 illustre les courbes de polarisation sous H₂ pur de PtRu(MgH₂)₈BM40h/WO₃(1:1at)+BM20h+lix préparé tel que décrit dans l'exemple 5, de PtRu(MgH₂)₈BM40h+lix tel que préparé dans l'exemple 1, et de PtRuBlack (Johnson-Matthey®).

La figure 4 illustre les courbes de polarisation obtenues sous H₂+100 ppm CO pour les mêmes catalyseurs que sur la figure 3.

La figure 5 illustre les courbes de polarisation obtenues sous H₂ pur pour le 20% PtRu(MgO)₈BM40h/XC-72R+lix tel que préparé dans l'exemple 3, le PtRu(MgO)₈BM40h+lix tel que préparé dans l'exemple 1, le 20% PtRuBM40h/XC-72R tel que préparé dans l'exemple 2, et le 20% PtRu/XC-72(E-Tek®).

La figure 6 illustre des courbes de polarisation obtenues sous H₂+100 ppm CO pour les mêmes catalyseurs que dans l'exemple 5.

La figure 7 illustré les courbes de polarisation obtenues sous H₂ pur pour le 20% PtRu(MgO)₈BM40h+XC-72R+lix préparé tel que décrit dans l'exemple 4, le PtRu(MgO)₈BM40h+lix préparé tel que décrit dans l'exemple comparatif 1, et le 20% PtRu/XC-72(E-Tek®).

La figure 8 illustre les courbes de polarisation obtenues sous H₂+100 ppm CO pour les mêmes catalyseurs que dans l'exemple 7.

La figure 9 est une photographie obtenue par microscopie électronique à balayage de la surface d'un échantillon de l'art antérieur, PtRu(MgO)₈BM40h+lix, à un grossissement de 30000 fois, en mode d'électrons secondaires.

La figure 10 est une photographie similaire à celle de la figure 9 mais en mode d'électrons rétrodiffusés.

La figure 11 est une photographie de la surface du même échantillon, PtRu(MgO)₈BM40h+lix, à un grossissement de 100000 fois, en mode d'électrons secondaires.

La figure 12 est une photographie de la surface d'un échantillon 20% PtRu(MgO)₈BM40h/XC-72R+lix à un grossissement de 30000 fois, en mode d'électrons secondaires.

La figure 13 est une photographie similaire à celle de la figure 12 mais en mode d'électrons rétrodiffusés.

La figure 14 est une photographie de la surface du même échantillon, 20% PtRu(MgO)₈BM40h/XC-72R+lix, à un grossissement de 100000 fois en mode d'électrons secondaires.

La figure 15 est une photographie similaire à celle de la figure 14 mais en mode d'électrons rétrodiffusés.

### Description détaillée et non limitative de l'invention

Tel que précédemment indiqué, l'invention vise un procédé pour la fabrication de catalyseurs supportés de structure nanocristalline et de surface spécifique de préférence supérieure à 2 m²/g, comprenant une première étape de broyage mécanique intense couplée à une seconde étape de lixiviation.

Les composés ou éléments chimiques utilisés comme produits de départ doivent remplir au moins une des fonctions suivantes:
i) être une "espèce catalytique", à savoir être un catalyseur ou un électrocatalyseur;
ii) être un agent de dispersion lixiviable;
iii) être un agent de dispersion non lixiviable ou très peu soluble dans la solution de lixiviation, en vue de servir de support.

Préférablement, la ou les espèces catalytiques utilisées contiennent au moins un élément choisi dans le groupe constitué par Pd, Pt, Ir, Os, Au, Rh, Ag, Ru, Ni.

Préférablement aussi, le ou les composés ou éléments chimiques non lixiviables capables de servir de support sont choisis parmi ceux ayant une grande surface spécifique et une bonne conduction électronique. À titre d'exemples de tels composés ou éléments chimiques, on peut citer le noir de carbone, le graphite, les zéolites dopées, les polyacrylonitriles pyrolysés, les carbures et les oxydes conducteurs.

Alternativement, le ou les composés ou éléments chimiques non lixiviables capables de servir de support sont choisis parmi ceux ayant une grande surface spécifique et une bonne conduction ionique. À titre d'exemples de tels composés ou éléments, on peut citer les polymères ionomériques conducteurs et les céramiques conductrices d'ions.

Ces composés ou éléments non lixiviables servent comme dispersants et comme supports pour les espèces catalytiques. Cependant, ils peuvent également servir de compléments durant la réaction de catalyse et, par exemple, améliorer la tolérance au CO des matériaux d'électrocatalyse (e.g. le WO₃ mis en présence avec le Pt).

Dans tous les cas, les composés ou éléments chimiques servant de support sont utilisés en quantité telle à présenter une concentration molaire supérieure à 50% dans le catalyseur supporté fabriqué.

Préférablement enfin, le ou les composés ou éléments chimiques lixiviables dans la seconde étape incluent au moins un élément non métallique choisi dans le groupe constitué par H, C, N, O, F, Cl, P et S; et la lixiviation de ce ou ces éléments est effectuée par décomposition thermique ou par réaction avec une autre phase.

Alternativement, le ou les composés ou éléments chimiques lixiviables dans la seconde étape sont choisis dans le groupe constitué par, d'une part, Mg, Li, Na, K, Ca, Ti, Zr et Zn et, d'autre part, les éléments non métalliques H, C, N, O, F, Cl, P et S; et la lixiviation de ce ou ces éléments est effectuée par décomposition thermique ou par réaction avec une autre phase.

Dans tous les cas, les composés ou éléments chimiques lixiviables présentent une concentration molaire supérieure ou égale à 2% et inférieure ou égale à 95% par rapport au total de tous les composés ou éléments chimiques utilisés.

Il existe plusieurs façons possibles de mettre en oeuvre le procédé selon l'invention, et plus précisément la première étape de celui-ci.

Selon un premier mode de réalisation possible, le matériau nanocristallin est préparé sous forme de poudre par un mélange de tous les composés ou éléments chimiques utilisés comme produits de départ, suivi d'un seul broyage mécanique intense.

Selon un second mode de réalisation possible, on mélange tous les composés ou éléments chimiques utilisés comme produits de départ sauf le ou les composés ou éléments chimiques servant de supports pour obtenir un premier mélange et on procède à un premier broyage mécanique intense de ce premier mélange. On ajoute alors le ou les composés ou éléments chimiques servant de supports pour obtenir un second mélange et on procède à un deuxième broyage mécanique intense de ce second mélange.

Selon un troisième mode de réalisation possible, on mélange tous les composés ou éléments chimiques utilisés comme produits de départ sauf le ou les composés ou éléments chimiques servant de supports et le ou les composés ou éléments chimiques lixiviables pour obtenir un premier mélange. On procède à un premier broyage mécanique intense de ce premier mélange; et on ajoute au premier mélange broyé le ou les composés ou éléments chimiques lixiviables pour obtenir un deuxième mélange et on procède à un second broyage mécanique intense de ce second mélange. Enfin, on ajoute au second mélange broyé le ou les composés ou éléments chimiques servant de supports pour obtenir un troisième mélange et on procède à un troisième broyage mécanique intense de ce troisième mélange.

Selon le mode de réalisation choisi, la première étape comprend donc un, deux ou trois broyages successifs.

Une fois ce ou ces broyages achevés, on peut alors mettre en oeuvre la seconde étape du procédé, laquelle consiste à lixivier la poudre obtenue pour dissoudre partiellement ou totalement le ou les composés ou éléments chimiques lixiviables.

Selon une variante possible de réalisation, le ou les composés ou éléments chimiques servant de support sont ajoutés seulement lors de la seconde étape de lixiviation, cet ajout étant effectué à la solution de lixiviation, et la solution de lixiviation est soumise à une agitation mécanique, magnétique et/ou ultrasonique.

Dans tous les cas, les composés ou éléments chimiques lixiviables ou non qui sont utilisés comme produits de départ, peuvent être broyés au préalables avant d'être utilisés.

Tel que précédemment indiqué, le catalyseur supporté obtenu peut être un nanocomposite, une solution solide, un intermétallique ou une combinaison de ceux-ci. Ce catalyseur peut être fait de plusieurs éléments (e.g. un nanocomposite comportant MoO₃+WO₃+PtRu+RuO₂+Pd).

Dans le cadre de la présente invention, il a été découvert que lorsque l'on utilise le procédé selon l'invention, on obtient un catalyseur supporté dont la taille des cristallites est beaucoup plus faible que celles obtenues par les procédés connus mentionnés dans le préambule de la présente description. De plus, on obtient une excellente dispersion de l'espèce catalytique sur le support choisi, ce qui permet de réduire la quantité requise d'espèces catalytiques habituellement dispendieuses par la fabrication d'un catalyseur d'efficacité donnée.

### Exemple comparatif 1: synthèse de PtRu non supporté par lixiviation

Le procédé qui a été utilisé dans cet exemple est celui décrit de façon large dans la demande internationale WO98/32885 au nom de la Demanderesse.

Dans un creuset en WC, avec 2, 3 ou 4 billes en WC, sous argon, on a placé le Pt(-200 mesh, 99.98%), le Ru(-325 mesh, 99.95%) et un agent de dispersion lixiviable dans un rapport atomique de 1:1:8, respectivement. Deux agents de dispersion lixiviable distincts ont été utilisés séparément, soit:
- MgH₂ (la poudre résultante sera ci-après dénotée PtRu(MgH₂)₈BM40h)
- MgO (la poudre résultante sera ci-après dénotée PtRu(MgO)₈BM40h)

La quantité de poudre totale à broyer était d'environ 7-8g et le nombre des billes ajoutées a été choisi pour obtenir un poids d'environ 40g, et ce pour un rapport billes/poudre de 5 en poids. Le broyage a duré 40 heures, c'est-à-dire jusqu'à ce qu'aucun changement ne soit observé dans la structure cristalline. L'étape de lixiviation a ensuite été entreprise avec la poudre broyée. Celle-ci a été placée dans 300 mL de solution HCl 1M sous agitation magnétique durant 8 heures ou plus. La solution résultante a ensuite été filtrée dans un papier filtre et entonnoir par gravitation, rincer à l'eau distillée, puis sécher à l'étuve sous air durant 8 heures environ jusqu'à évaporation de l'eau.

### Exemple comparatif 2: synthèse de PtRu supporté sur le noir de carbone, sans lixiviation

Le procédé qui a été utilisé dans cet exemple est décrit dans l'article de R. Schulz et al., *"A novel method to produce nanocrystalline metastable supported catalysts"*, Catalysis Letters, Vol. 35 (1995) 89. Cet article décrit plus précisément un procédé dans lequel une solution supersaturée de NiRu est préparée par broyage mécanique intense et la poudre obtenue est ensuite broyée avec de l'alumine, ce qui disperse le NiRu sur l'alumine.

Le procédé en question a donc été utilisé dans le cas présent pour produire un électrocatalyseur à base de PtRu. Un alliage de PtRu a été produit par un premier broyage mécanique intense. Cet alliage a alors été soumis à un second broyage en présence de noir de carbone. La concentration de PtRu par rapport au carbone était de 20% en poids.

Plus précisément, dans un creuset en WC, avec 2, 3 ou 4 billes en WC, sous argon, on a placé le Pt(-200 mesh, 99.98%) et le Ru (-325 mesh, 99.95%) pour obtenir un rapport atomique de 1:1. La quantité de poudre totale à broyer était d'environ 7-8g et le poids des billes était d'environ 40g, et ce pour un rapport billes/poudres de 5 en poids. Le nombre de billes a été ajusté pour totaliser 40g. Le broyage a duré 40 heures. On a pris ensuite 200 mg de cette poudre (PtRuBM40h) et on l'a placé dans un creuset de WC avec 800 mg de noir de carbone XC-72R Les deux billes de WC utilisées pour ce broyage pesaient 15g au total. Un broyage de 20 heures a été effectué sous Ar.

La poudre résultante sera ci-après dénotée 20% PtRu BM40h/XC-72R.

### Exemple 3 selon l'invention: synthèse de PtRu supporté sur le noir de carbone avec lixiviation

On a préparé du PtRu(MgO)₈ BM40h en opérant tel que décrit dans l'exemple comparatif 1 si ce n'est qu'on n'a pas lixivié immédiatement le produit obtenu.

Dans un creuset en WC, avec 2, 3 ou 4 billes en WC, sous argon, on a placé le PtRu(MgO)₈BM40h obtenu et du noir de carbone (XC-72R), dans un rapport totalisant 20% en poids de PtRu sur carbone. Le produit résultant après broyage sera dénoté PtRu(MgO)₈BM-40h/XC-72R.

La quantité de poudre totale à broyer était d'environ 1,4g et le nombre de billes ajoutées a été choisi pour totaliser un poids d'environ 15g, et ce pour un rapport billes/poudres de 10 en poids. Le broyage a été de 20 heures. Une fois broyée, la poudre a été placée dans 300mL de solution HCl 1M sous agitation magnétique durant 8 heures. La solution résultante a ensuite été filtrée dans un papier filtre et entonnoir par gravitation, rincer à l'eau distillée, puis sécher à l'étuve sous air durant 8 heures environ jusqu'à évaporation de l'eau.

### Exemple 4 selon l'invention: synthèse de PtRu dispersé sur le noir de carbone avec lixiviation

On a préparé du PtRu(MgO)₈BM40h en opérant tel que décrit dans l'exemple comparatif 1, si ce n'est qu'à l'étape de lixiviation, du noir de carbone est ajouté à la solution de HCl 1M. Le PtRu(MgO)₈ BM40h a été ajouté à la solution dans un rapport totalisant environ 20% en poids de PtRu sur carbone. Le produit obtenu selon cette synthèse sera ci-après dénotée PtRu(MgO)₈BM40h+XC-72R.

### Exemple 5 selon l'invention: synthèse de PtRu dispersé sur WO₃ avec lixiviation

On a préparé du PtRu(MgH₂)₈BM40h en opérant tel que décrit dans l'exemple 1 si ce n'est que l'on n'a pas lixivié immédiatement le produit obtenu. Dans un creuset en WC, avec 2, 3 ou 4 billes en WC, sous argon, on a placé le PtRu(MgH₂)₈BM40h et le WO₃, dans un rapport atomique de 1:1. Le résultat après broyage a été dénoté PtRu(MgH₂)₈BM40h/WO₃.

La quantité de poudre totale à broyer était d'environ 7g et le nombre de billes ajoutées a été choisi pour totaliser un poids d'environ 40g, et ce pour un rapport billes/poudres de près de 6 en poids. Le broyage a été de 20 heures. Une fois broyée, la poudre a été placée dans 300 mL de solution HCl 1M sous agitation magnétique durant plus de 8 heures. La solution résultant a ensuite été filtrée dans un papier filtre et entonnoir par gravitation, rincer à l'eau distillée, puis sécher à l'étuve sous air durant 8 heures environ jusqu'à évaporation de l'eau.

### Analyse comparative des produits exemplifiés

L'avantage du procédé selon l'invention combinant un broyage mécanique à une lixiviation ressort clairement des données reportées dans le tableau suivant. Ces données incluent les résultats de mesures des surfaces spécifiques (BET) effectuées avec un appareil Autosorb-1® de Quantachrome Corporation. Elles incluent aussi les résultats des mesures de la taille de cristallite obtenues par diffraction de rayons X (diffractomère Siemens D-500, CuKα) en utilisant l'équation de Debye-Scherrer (R.D. Cullity, *"Eléments of X-Ray Diffraction"*, Addison-Wesley Publishing Company, 1956, Reading, Massachusetts, USA).

**TABLEAU**

| **Échantillon** | **Surface** **spécifique** **(m**^{**2**}**/g)** | **Diamètre** **cristallite** **(nm)** |
|---|---|---|
| **Produits commerciaux** | | |
| Ptblack(Alfa Aesar,Johnson-Matthey) | 44.3 | Pt:5.0 |
| PtRu black(Alfa Aesar, Johnson-Matthey) | 63.2 | Pt:6.3 |
| PtRuOx(E-Tek ®) | 145 | Pt:3.6 |
| Pt/XC-72 20wt%(E-Tek ®) | 156.52 | Pt:2.7 |
| PtRu/XC-72 20wt%(E-Tek ®) | 148.70 | Pt:1.7 |

| **Échantillon sans traitement spécial** | | |
|---|---|---|
| Ru non broyé | | Ru:71.2 |
| Ru BM40h | | Ru:10.2 |
| Pt non broyé | | Pt:70.1 |
| Pt BM40h | 0.25 | Pt:13.4 |
| PtRuBM40h | 0.45 | Pt:10.5 |

| **Catalyseurs non supportés (art antérieur, exemple 1)** | | |
|---|---|---|
| PtRu(MgO)₈BM40h+lix. PtRu(MgH₂)₈BM40h + lix. | 23.90 43.98 | Pt:8.8 Ru:18.6 Pt:17.1 Ru:32.1 |

| **Catalyseurs supportés (art antérieur, exemple 2)** | | |
|---|---|---|
| PtRuBM40h/XC-72 (20%pds PtRu/C)+BM20h | | Pt:7.9 |

| **Catalyseurs dispersés, supportés et lixiviés selon l'invention** | | |
|---|---|---|
| PtRu(MgO)₈BM40h/XC-72(20%pdsPtRu/C)+BM20h+lix. | 92.77 | Pt:5.4 Ru:12.6 |
| PtRu(MgH₂)₈BM40H/WO₃(1:1 at)⁺ BM20h+lix. | 46.94 | Pt:4.3 Ru:27.2 |

Dans ce tableau, des mesures-effectuées sur des produits commerciaux sont données en guise de référence. On notera pour ces produits que le diamètre des cristallites est inférieur à 10 nm et que les surfaces spécifiques sont toutes supérieures à 30 m²/g.

Les poudres de Ru et de Pt prises telles quelles, i.e. non broyées, montrent des tailles de cristallites de l'ordre de 70 nm. Un broyage mécanique de 40 heures sous argon leur donne une taille de 10.2 et de 13.4 nm, pour le Ru et le Pt, respectivement. Cependant, la surface spécifique du Pt broyé est faible: 0.25 m²/g. Si on broie Pt et Ru (1:1 at) ensemble durant 40 heures sous Ar, la taille de cristallites est de 10.5 nm et la surface spécifique double presque par rapport au Pt broyé: (0.45 m²/g) mais demeure toujours très basse. De ces expériences, on peut déduire le point suivant. Il ne faut pas considérer la taille des cristallites comme proportionnelle à la surface spécifique. Bien qu'une taille de cristallites de l'ordre de quelques nanomètres soit une condition essentielle à l'obtention de particules de dimension similaire, il y a un phénomène de soudage à froid qui s'opère entre les cristallites durant le broyage mécanique, ce qui fait augmenter la taille des particules.

En utilisant le procédé de préparation décrit dans l'exemple 1 qui est illustratif de l'art antérieur, on réussit à augmenter la surface spécifique à des niveaux supérieurs à 20 m²/g. Par exemple, pour PtRu(MgO)₈BM40h+lix. et pour PtRu(MgH₂)₈BM40h+lix., on obtient des surfaces spécifiques de 23.90 et 43.98 m²/g, respectivement.

Il est à noter qu'on ne trouve pas seulement des cristallites de Pt, mais aussi de Ru. Ce qui indique l'existence d'un nanocomposite.

On remarque aussi que la taille de cristallites de PtRuBM40h passe de 10.5 nm à 8.8 nm si l'on suit la procédure de l'art antérieur, exemple 1. Il est également intéressant d'observer que la taille des cristallites de PtRuBM40h passe de 10.5 nm à 7.9 nm si celui-ci est dispersé par broyage mécanique de 20 heures avec noir de carbone, PtRuBM40h/XC-72 (20% pds PtRu/C) + BM20h (art antérieur, exemple 2). Et cette taille de cristallites passe ensuite à 5.4 nm si l'on suit la procédure de la présente invention, soit PtRu(MgO)₈BM40h/XC-72 (20% pds PtRu/C)+BM20h+lix. Or, la diminution de la taille de cristallite est essentielle pour arriver à diminuer la quantité de matériau catalytique nécessaire à la fabrication d'électrodes. On observe donc que le procédé de la présente invention permet de diminuer la taille des cristallites davantage que toutes les méthodes précédentes de l'art antérieur, que ce soit le procédé décrit dans l'exemple 1, où la taille de cristallite passe de 10.5 nm à 8.8 nm avec PtRu(MgO)₈BM40h+lix., ou celui décrit dans l'exemple 2, où la taille de cristallite passe de 10.5 nm à 7.9 nm avec PtRuBM40h/XC-72 (20% pds PtRu/C)+BM20h. Il y a donc un effet de synergie lorsqu'on utilise les deux procédés.

La surface spécifique du catalyseur dispersé PtRu(MgO)₈BM40h/XC-72 (20% pds PtRu/C)+BM20h-lix. selon l'invention est de 92.77 m²/g alors que celle du catalyseur commercial PtRu/XC-72 20wt% (E-Tek®) est de 148.70 m²/g. Cette différence de 50% est probablement attribuable à une diminution de surface du noir de carbone (XC-72R) lors du broyage mécanique, possiblement due à une fermeture de certains pores dans le noir de carbone.

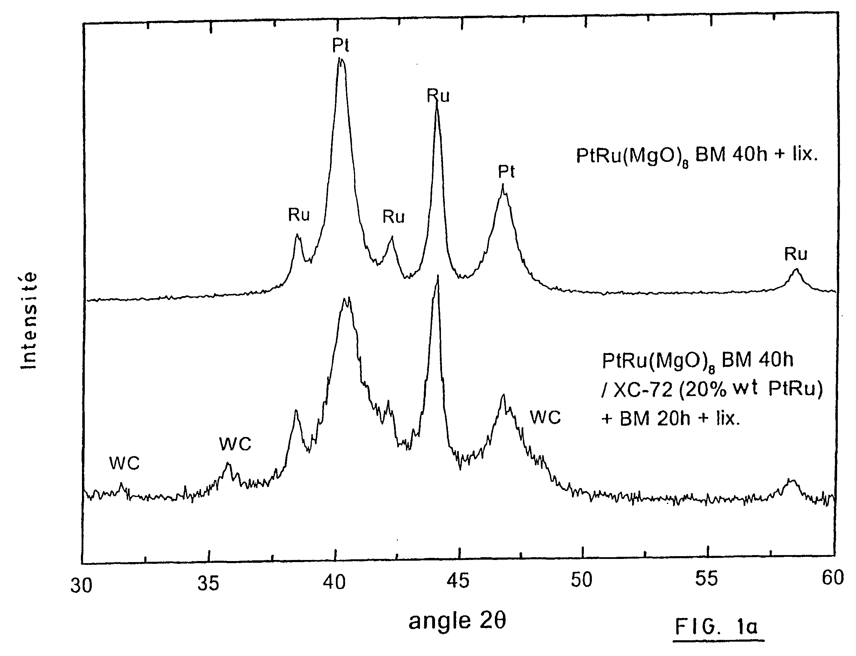

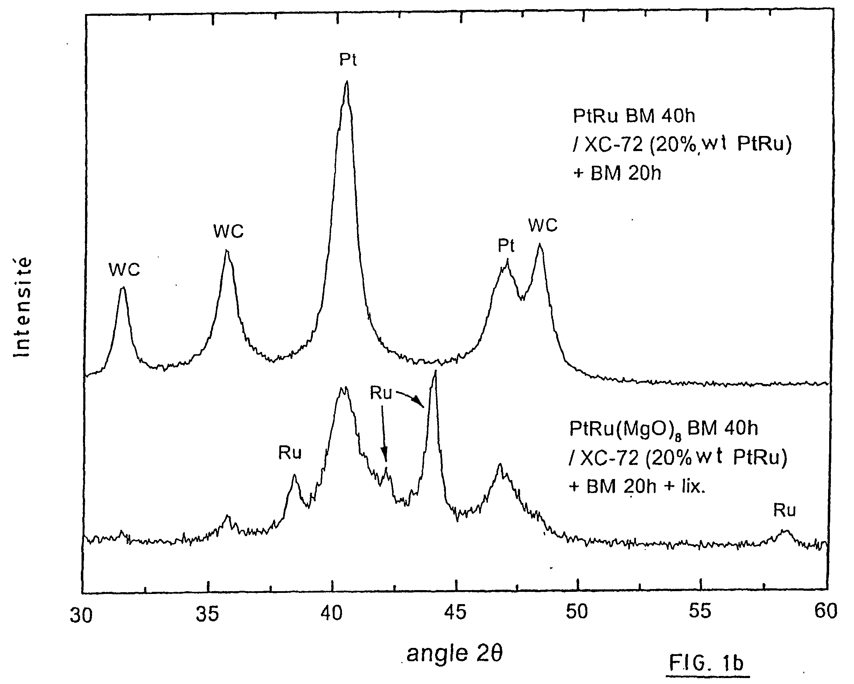

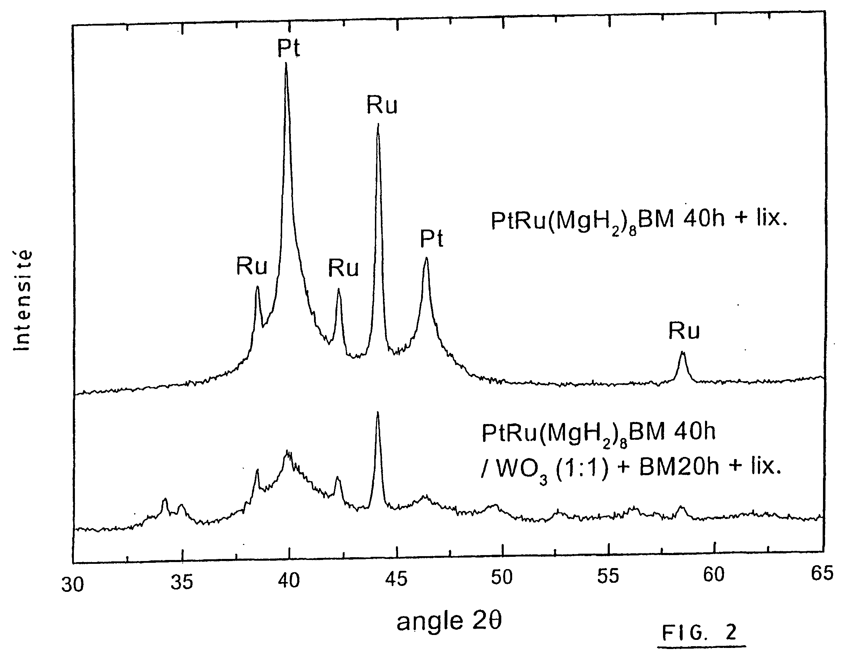

Les figs 1a, 1b et 2 montrent bien l'élargissement des pics de Pt lorsque le traitement de dispersion avec l'agent non lixiviable est appliqué. À la fig. la, bien que le signal du PtRu(MgO)₈BM40h/XC-72(20% pds PtRu/C)+BM20h+lix. selon l'invention soit plus faible, on remarque que la largeur à mi-hauteur des pics de Pt est plus grande que pour celle de PtRu(MgO)₈BM40h+lix, ce qui indique une taille de cristallite plus petite. Le même phénomène est observé à la fig. 1b où le catalyseur supporté PtRuBM40h/XC-72 (20% pds PtRu/C)+MB20h voit l'élargissement de son pic principal de Pt inférieur à celui du catalyseur supporté obtenu selon le procédé de l'invention, PtRu(MgO)₈BM40h/WO₃BM40h/XC-72 (20% pds PtRu/C)+BM20h+lix. Et un élargissement du pic de Pt est aussi observé en passant de PtRu(MgH₂)₈BM40h+lix à PtRu(MgH₂)₈BM40h/WO₃(1:lat)+BM20h+lix.(voir figure 2). On remarque dans ce dernier spectre la présence d'une multitude d'autres pics; ceux-ci sont associés à H₂WO₄.H₂O, WO₃.H₂O et H_{0.12}WO₃.2H₂O.

### Assemblage d'électrodes pour tests en pile à combustible

Des tests ont été effectués sur les catalyseurs supportés selon l'invention., Plus précisément, des tests en pile à combustible ont été effectués dans une cellule de 5 cm², provenant de la compagnie GlobeTech. On a inséré dans cette cellule un Assemblage Membrane-Électrodes (AME) préparé comme suit.

Une membrane polymérique de marque Nafion®, modèle 117, a été obtenue de la compagnie DuPont. Elle a été taillée pour mesurer 25 cm². Elle a été nettoyée en suivant le traitement suivant.
i) bouillir 1 heure dans H₂O₂ à 3% vol. (dilution avec eau déinonisée, >10MΩcm)
ii) rincer à l'eau déionisée
iii) bouillir 1 heure dans H₂SO₄ à 0.1M
iv) rincer à l'eau déionisée
v) bouillir 1 heure dans eau déionisée

La cathode provenait de la compagnie E-Tek® et était faite d'un tissu imprégné de noir de carbone et de très fines particules de Teflon®. Sur l'une des surfaces a été déposé un électrocatalyseur commercial composé de fines particules de Pt adsorbées sur du noir de carbone. La marque de commerce de ce catalyseur est "catalyzed Elat®" et il présente une charge en Pt de 0.35-0.40 mg/cm². Une couche de Nafion® sous forme soluble a été déposée sur la surface de la cathode et séchée pour donner un poids de 0.6 mg Nafion/cm².

L'anode a été préparée en fabriquant une encre contenant le catalyseur. Cette encre a été déposée sur la surface d'un autre tissu de carbone imprégné de Teflon® sans catalyseur, "uncatalyzed Elat®", pour donner une charge de 4 mg/cm² de catalyseur.

À titre d'essai comparatif, une encre a été préparée en agitant ultrasoniquement dans une bouteille fermée durant 40 à 50 minutes, 40 mg de catalyseur, 150 µL de *Nafion*® en solution (Aldrich, 5% en poids), 100 µL d'eau déionisée, 300 µL de méthanol grade électronique et 60 µL de glycérine. 305 µL de cette solution a été pipettée et déposée sur la surface du tissu de carbone. Cette électrode a ensuite été séchée sous vide durant 2 heures à environ 100°C.

Dans le cas des catalyseurs dispersés avec noir de carbone, la charge était de 0.4 mg/cm². L'encre a été préparé en agitant ultrasoniquement dans une bouteille fermée durant 40 à 50 minutes, 17.5 mg de catalyseur, 370 µL de *Nafion*® en solution, 200 µL de méthanol grade électronique et 60 µL de glycérine. 315 µL de cette solution est pipettée et déposée sur la surface du tissu de carbone. Cette électrode a ensuite été séchée sous vide durant 2 heures à environ 100°C.

On a pressé ensuite la membrane entre l'anode et la cathode à l'aide d'une presse à chaud à 140°C, durant 40 secondes à une pression de 2500 livres.

Les conditions opératoires de la pile ont été les suivantes:
- T_{cellule}=80°C
- T_{H2O} = 110°C (hydrogène et oxygène)
- débit = 0.2 SLM (hydrogène et oxygène)
- P_{oxygène} = 60 psig
- P_{hydrogène} = 30 psig

Les tests ont été effectués avec hydrogène pur et oxygène pur. Après les tests sous hydrogène pur, un gaz d'hydrogène contenant 100 ppm CO a été utilisé pour vérifier la tolérance au CO. Ce gaz a été passé dans la pile en circuit ouvert durant 30 minutes avant les premières mesures.

### Analyse des résultats obtenus dans des piles à combustible

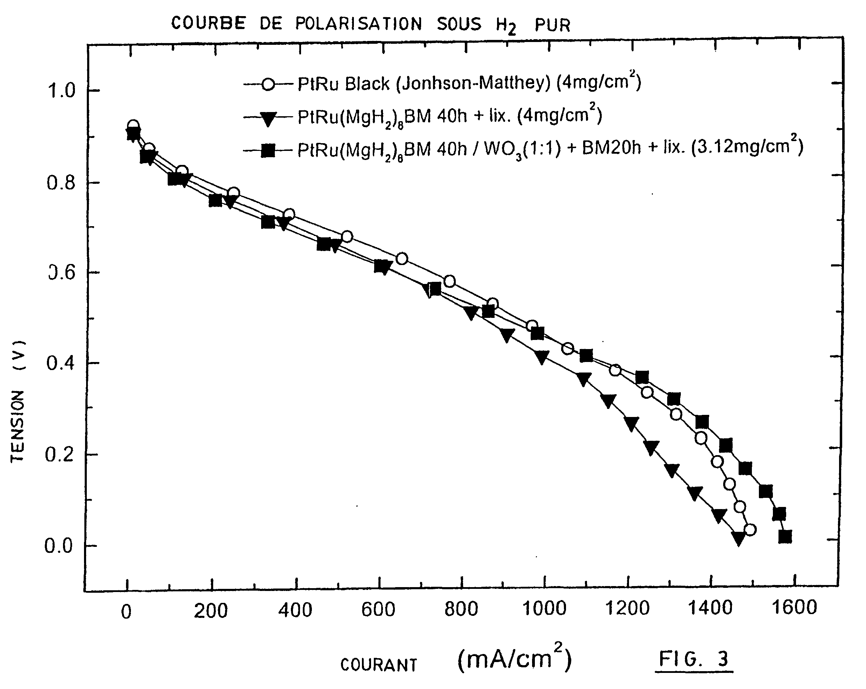

La fig. 3 montre les courbes de polarisation sous H₂ pur de PtRu(MgH₂)₈BM40h/WO₃ (1:1 at)+BM20h+lix. (exemple 5) comparé à PtRu(MgH₂)₈BM40h+lix. (art antérieur - exemple 1) et à PtRuBlack (Johnson-Matthey). Ce dernier est légèrement supérieur en activité aux deux autres. Cependant, puisque la charge de catalyseur est la même pour toutes les anodes testées, il y a 22% moins de PtRu en poids dans le PtRu(MgH₂)₈BM40h/WO₃(1:1 at)+MB20h+lix. selon l'invention que pour les autres catalyseurs. On réussit donc avec l'invention à réduire la quantité de métal noble tout en conservant approximativement la même activité catalytique.

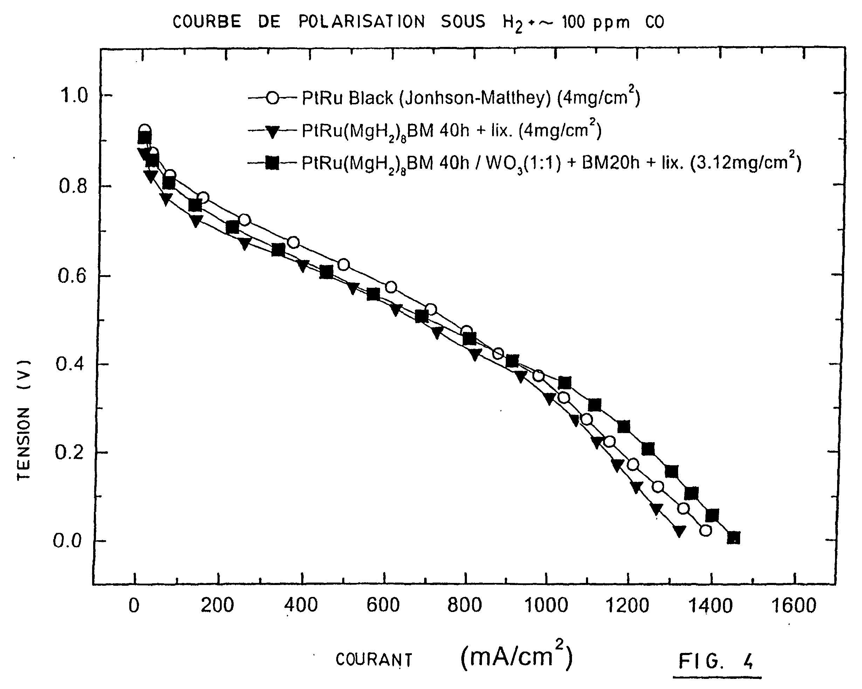

La fig. 4 montre les courbes de polarisation obtenues sous H₂+100 ppm CO pour les mêmes catalyseurs. Tous sont affectés par la présence du CO, mais ils démontrent à peu près tous les mêmes performances. Ici encore, il y a moins de PtRu en poids dans le PtRu(MgH₂)₈BM40h/WO₃ (1:1 at)+BM20h+lix. selon l'invention que dans les autres catalyseurs.

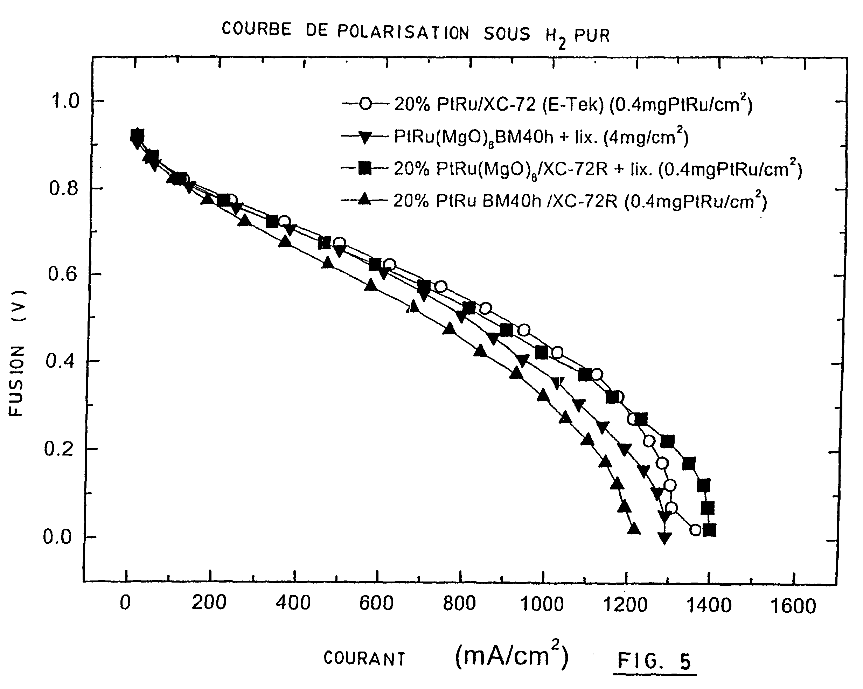

La fig. 5 montre les courbes de polarisation obtenues sous H₂ pur pour 20% PtRu(MgO)₈BM40h/XC-72R+lix. comparé à PtRu(MgO)₈BM40h+lix., à 20% PtRuBM40h/XC-72R (art antérieur, exemple 2) et à 20% PtRu/XC-72 (E-Tek®). On y remarque des activités catalytiques relativement comparables pour tous les catalyseurs, surtout au potentiel supérieur à 0.5V. Ici encore, le 20% PtRu(MgO)₈BM40h/XC-72R+lix. utilise moins de PtRu que le PtRu(MgO)₈BM40h+lix. pour des performances semblables.

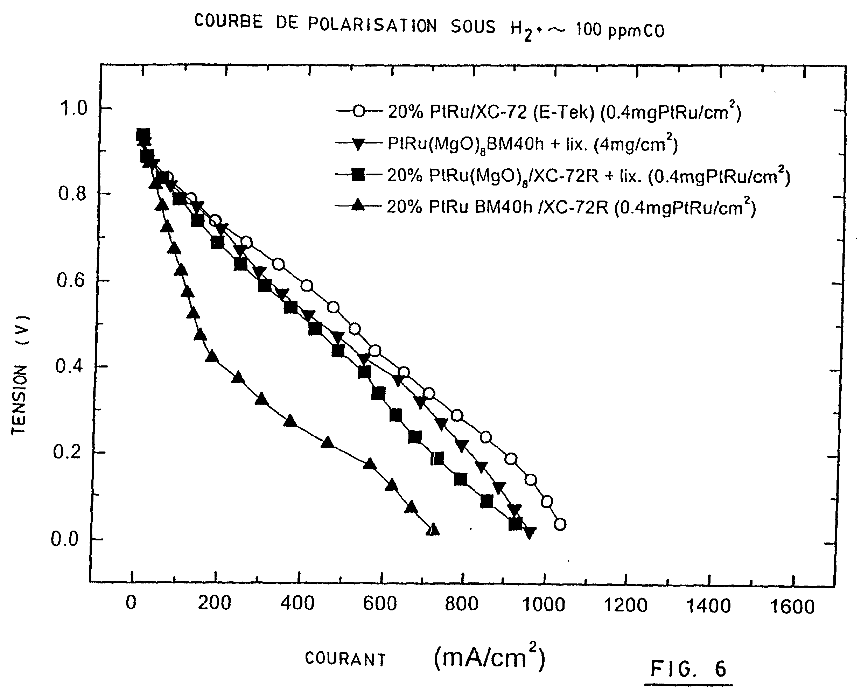

La fig. 6 montre les courbes de polarisation obtenues sous H₂+100 ppm CO pour les mêmes catalyseurs. À 0.5V, le catalyseur commercial 20% PtRu/XC-72 (E-Tek®) est légèrement moins affecté que les deux autres bien que ces derniers ne soient pas très loin. Et ici encore, l'argument d'économie de PtRu dans le 20% PtRu(MgO)₈BM40h/XC-72R+lix. selon l'invention par rapport au PtRu(MgO)₈BM40h+lix, (art antérieur - exemple 1) demeure valable. Par ailleurs, le catalyseur 20% PtRuBM40h/XC-72R (art antérieur - exemple 2) montre des performances nettement inférieures à celles offertes par les autres. Ce qui démontre, à concentration égale de PtRu, l'avantage du nouveau procédé de fabrication par rapport à celle de l'art antérieur - exemple 2.

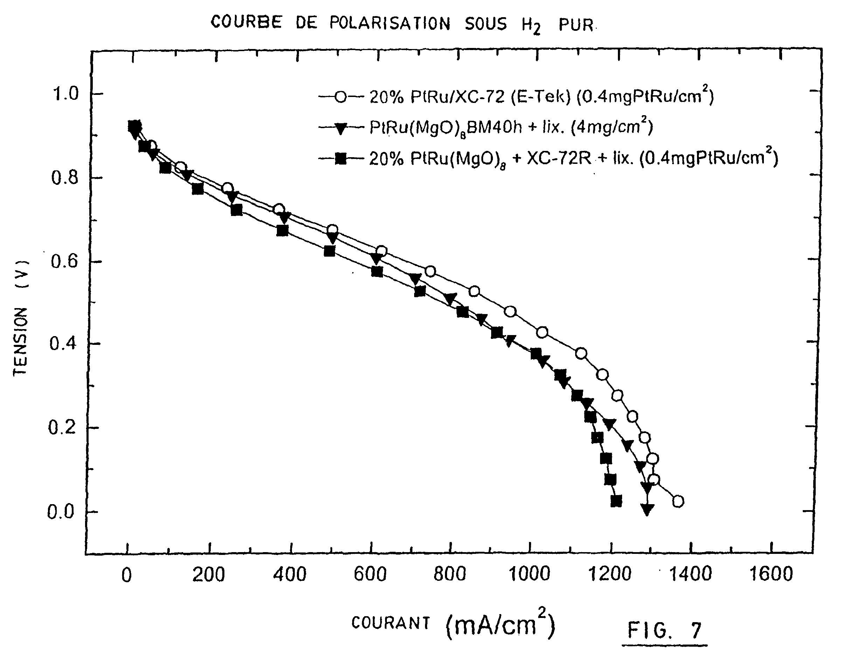

La fig. 7 montre les courbes de polarisation obtenues sous H₂ pur pour le 20% PtRu(MgO)₈BM40h+XC-72R+lix. selon l'invention comparé à PtRu(MgO)₈BM40h+lix. et à 20% PtRu/XC-72 (E-Tek®). Les activités catalytiques étant relativement comparables pour ces catalyseurs, on en déduit que le procédé selon l'invention où les composés non lixiviables sont ajoutés à l'étape de la lixiviation donnent des produits comparables aux autres (fig. 5 vs fig. 7).

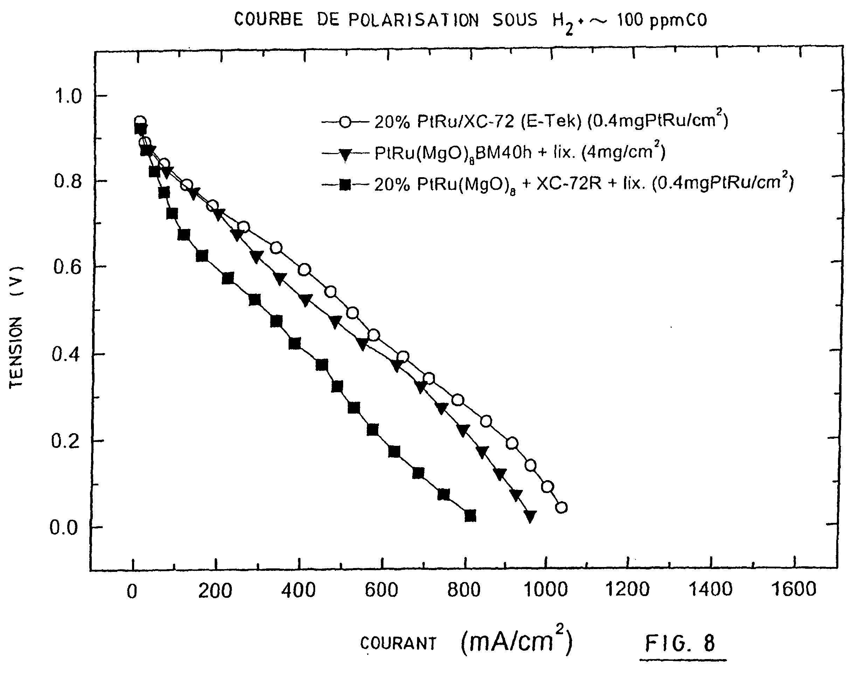

La fig. 8 montre les courbes de polarisation obtenues sous H₂+100 ppm CO pour les mêmes catalyseurs. Cette fois, à 0.5 V, le 20% PtRu(MgO)₈BM40h+XC-72R+lix. selon l'invention montre des résultats moins satisfaisants qu'à la fig. 6. Néanmoins, les performances démontrent tout de même que le procédé de préparation demeure valable.

### Analyse de résultats obtenus par microscopie électronique à balayage

Les produits préparés dans les exemples, ont été analysés avec un microscope électronique à balayage Hitachi® S-4700.

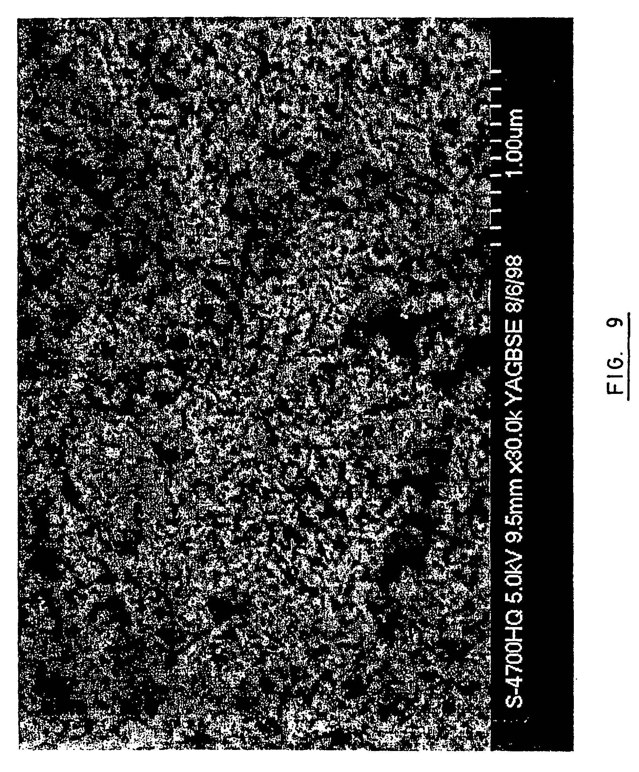

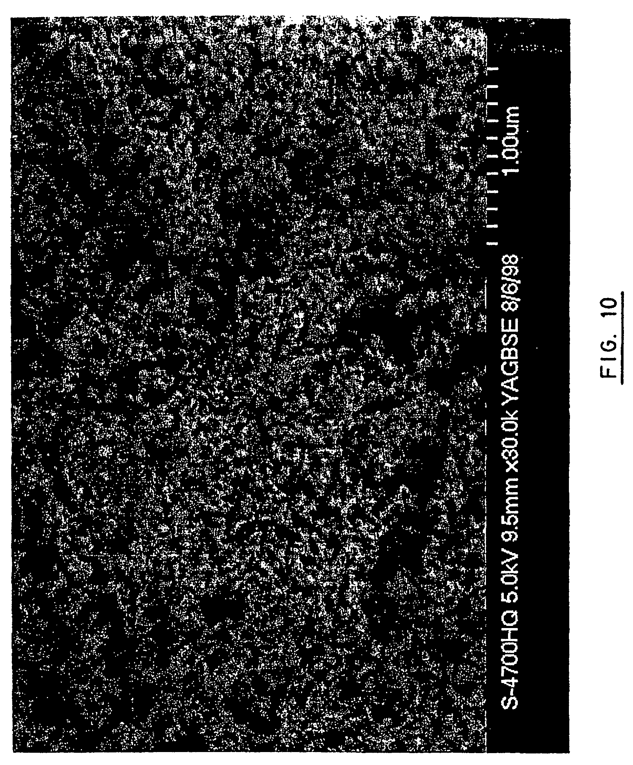

La fig. 9 montre la surface d'un échantillon de l'art antérieur, PtRu(MgO)₈BM40h+lix. (exemple 1), à un grossissement de 30,000 fois, en mode d'électrons secondaires. La surface est très poreuse et la dimension de ces pores est nettement inférieure à 1 µm. La fig. 10 est la même, mais prise en mode d'électrons retrodiffusés. L'uniformité de l'intensité indique une composition chimique homogène.

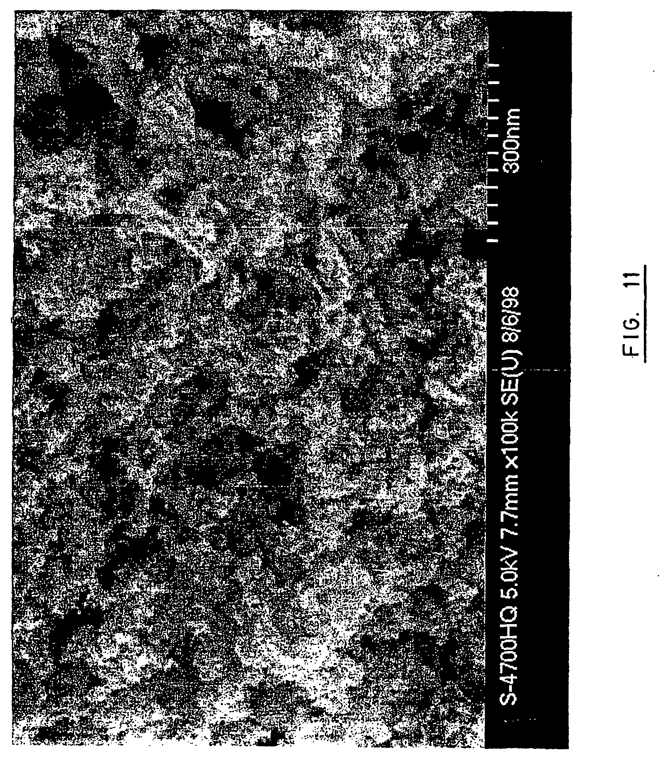

La fig. 11 montre la surface du même échantillon, PtRu(MgO)₈BM40h+lix., à un grossissement de 100,000 fois, en mode d'électrons secondaires. On observe une grande quantité de pores d'environ 10 nm et moins. Donc, cette structure est comme une éponge avec de pores nanométriques.

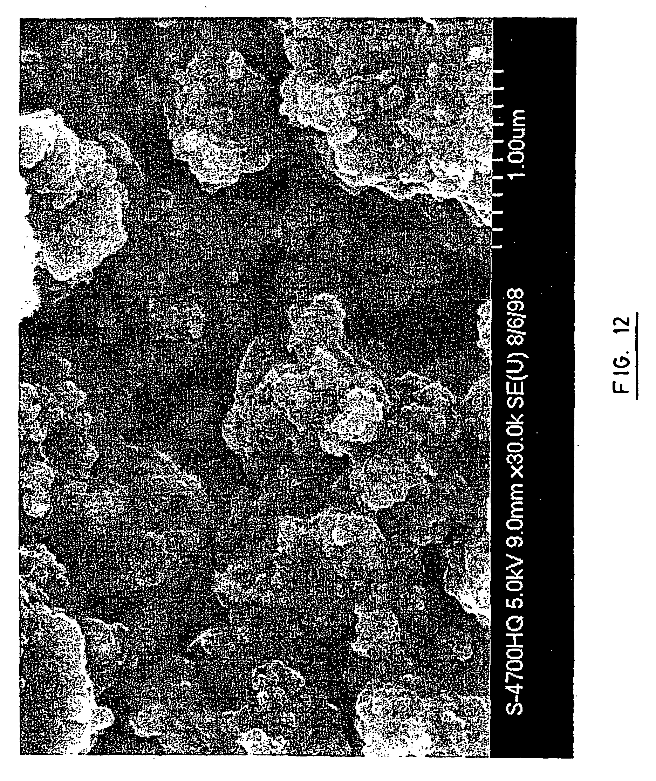

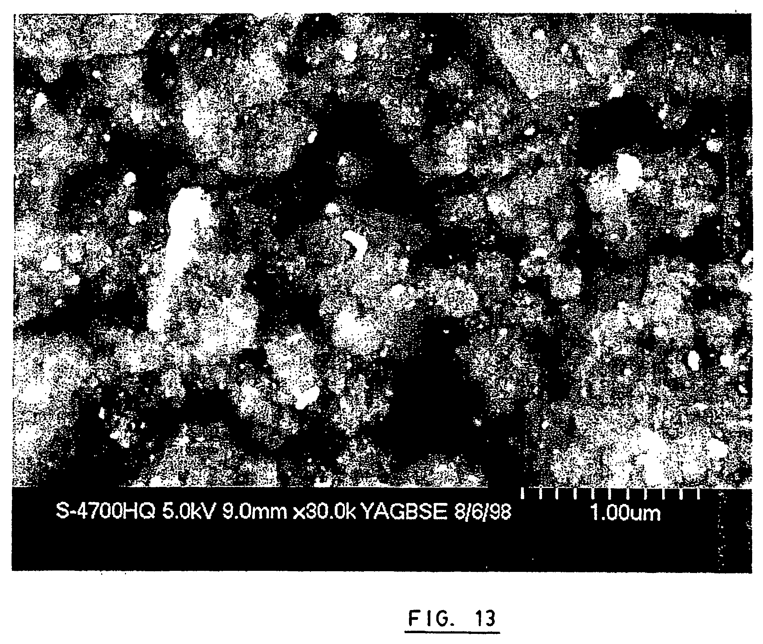

La fig. 12 montre la surface de l'échantillon du 20% PtRu(MgO)₈BM40h/XC-72R+lix. selon l'invention (exemple 3) à un grossissement de 30,000 fois, en mode d'électrons secondaires. La présence du noir de carbone (le XC-72R) change drastiquement la morphologie. En effet, contrairement à la fig. 9, où seulement le nanocomposite de Pt-Ru est présent, on ne voit pratiquement que les formes arrondies du noir de carbone. Lorsqu'on regarde la même image, mais en mode d'électrons rétrodiffusés (fig. 13), on y voit apparaître les particules de Pt et de Ru, beaucoup plus massives que le carbone. Les tailles de particules vont du micromètre à beaucoup plus petit. Elles sont dispersées sur le noir de carbone.

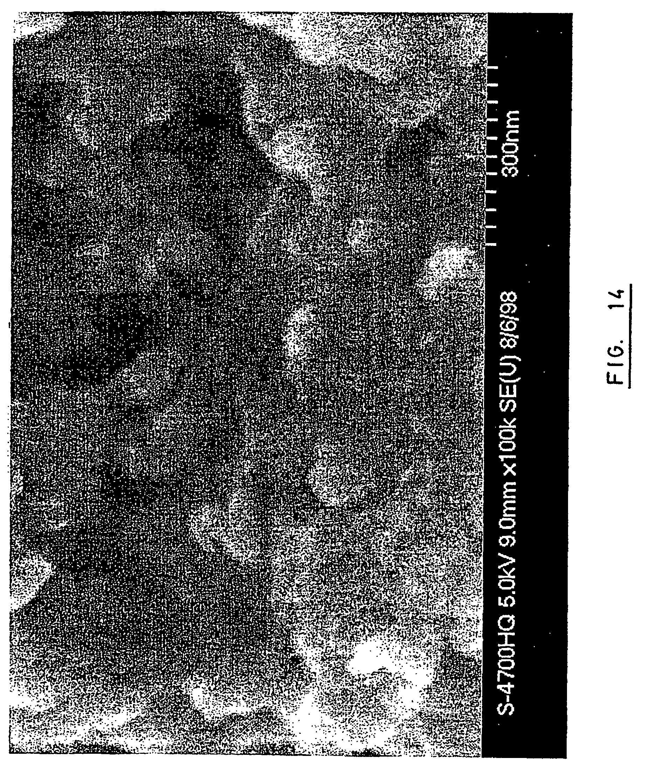

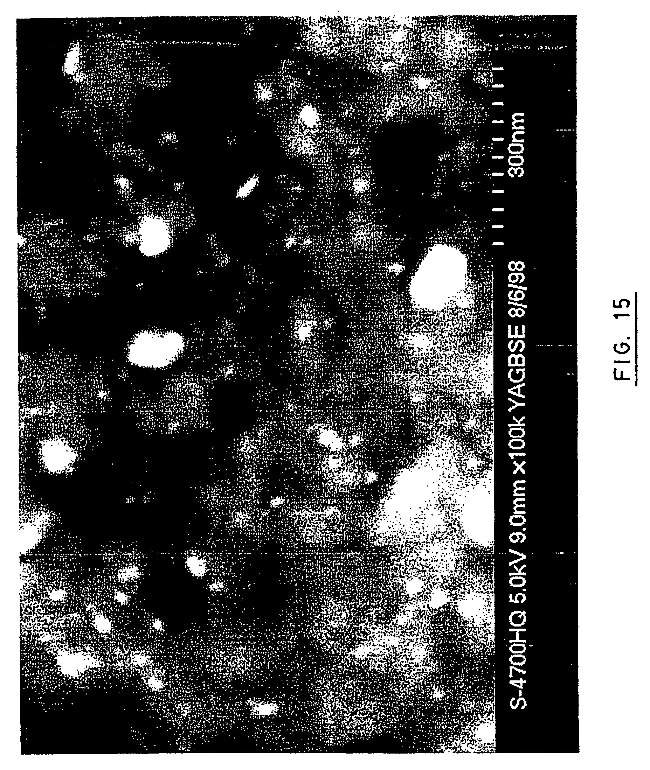

La fig. 14 montre un agrandissement de 100,000 fois de la surface du même échantillon, 20% PtRu(MgO)₈BM40h/XC-72R+lix., en mode d'électrons secondaires. Les formes arrondies du noir de carbone y sont toujours observées. En mode d'électrons rétrodiffusés, (fig. 15), on observe facilement des particules de Pt et Ru de l'ordre de 10 nm et moins dispersés sur le noir de carbone. Ainsi, on voit que ces particules sont de la taille des cristallites, c'est-à-dire de l'ordre d'environ 5 nm, comme mesuré en XRD. Ce qui signifie que le procédé de fabrication selon l'invention parvient à séparer les cristallites pratiquement une à une.

## Revendications

1. Procédé de fabrication d'un catalyseur supporté de structure nanocristalline et de grande surface spécifique dans lequel:
- dans une premier étape, on prépare un matériau nanocristallin constitué d'un composite ou alliage métastable d'au moins deux composés ou éléments chimiques distincts contenant au moins une espèce catalytique, le matériau ainsi préparé ayant une structure nanocristalline avec des cristaux de taille inférieure à 100 nm; et
- dans une seconde étape, on soumet ledit matériau nanocristallin à une lixiviation au moyen d'une solution dite de lixiviation de façon à éliminer partiellement ou totalement au moins un desdits composés ou éléments du matériau, autre que la ou les espèces catalytiques;
**caractérisé en ce que** au moins un composé ou élément chimique non lixiviable servant de support à l'espèce catalytique est ajouté au matériau à la première étape ou à la solution de lixiviation à la seconde étape.

2. Procédé selon la revendication 1, **caractérisé en ce que** le ou les composés ou éléments chimiques servant de supports ont une grande surface spécifique et une bonne conduction électronique.

3. Procédé selon la revendication 1, **caractérisé en ce que** le ou les composés ou éléments chimiques servant de supports sont choisis dans le groupe constitué par le noir de carbone, le graphite, les zéolites dopées, les polyacrylonitriles pyrolysés, les carbures et les oxydes.

4. Procédé selon la revendication 1, **caractérisée en ce que** le ou les composés ou éléments chimiques servant de supports ont une grande surface spécifique et une bonne conduction ionique.

5. Procédé selon la revendication 1, **caractérisé en ce que** le ou les composés ou éléments chimiques servant de supports ont été choisis dans le groupe constitué par les polymères ionomériques conducteurs et les céramiques conductrices d'ions.

6. Procédé selon la revendication 1, **caractérisé en ce que** le ou les composés ou éléments chimiques servant de supports se trouvent sous la forme de poudre, de grille, de lamelle, de film ou de plaque.

7. Procédé selon l'une quelconque des revendications 1 à 6, **caractérisé en ce que** le ou les espèces catalytiques utilisées contiennent au moins un élément choisi dans le groupe constitué par Pd, Pt, Ir, Os, Au, Rh, Ag, Ru et Ni.

8. Procédé selon l'une quelconque des revendications 1 à 7, **caractérisé en ce que**:
- le ou les composés ou éléments chimiques lixiviés dans la seconde étape incluent au moins un élément non métallique choisi dans le groupe constitué par H, C, N, O, F, Cl, P et S; et
- la lixiviation de ce ou ces éléments est effectuée par décomposition thermique ou par réaction avec une autre phase.

9. Procédé selon l'une quelconque des revendications 1 à 7, **caractérisé en ce que**:
- le ou les composés ou éléments chimiques lixiviés dans la seconde étape sont choisis dans le groupe constitués par, d'une part, Mg, Li, Na, K, Ca, Ti, Zr, et Zn et, d'autre part, les éléments non métalliques H, C, N, O, F, Cl, P et S; et
- la lixiviation de ce ou ces éléments est effectuée par décomposition thermique ou par réaction avec une autre phase.

10. Procédé selon l'une quelconque des revendications 1 à 9, **caractérisé en ce que** le ou les composés ou éléments chimiques lixiviables présentent une concentration molaire supérieure ou égale à 2% et inférieure ou égale à 95% par rapport au total de tous les composés ou éléments chimiques utilisés.

11. Procédé selon l'une quelconque des revendications 1 à 10, **caractérisé en ce que** dans la première étape, le matériau nanocristallin est préparé sous forme de poudre par un mélange de tous les composés ou éléments chimiques utilisés comme produits de départ, suivis d'un seul broyage mécanique intense.

12. Procédé selon l'une quelconque des revendications 1 à 10, **caractérisé en ce que** dans la première étape:
- on mélange tous les composés ou éléments chimiques utilisés comme produits de départ sauf le ou les composés ou éléments chimiques servant de supports pour obtenir un premier mélange et on procède à un premier broyage mécanique intense de ce premier mélange; et
- on ajoute le ou les composés ou éléments chimiques servant de supports pour obtenir un second mélange et on procède à un deuxième broyage mécanique intense de ce second mélange.

13. Procédé selon l'une quelconque des revendications 1 à 10, **caractérisé en ce que** dans la première étape:
- on mélange tous les composés ou éléments chimiques utilisés comme produits de départ sauf le ou les composés ou éléments chimiques servant de supports et le ou les composés ou éléments chimiques lixiviables pour obtenir un premier mélange et on procède à un premier broyage mécanique intense de ce premier mélange; et
- on ajoute au premier mélange broyé le ou les composés ou éléments chimiques lixiviables pour obtenir un deuxième mélange et on procède à un second broyage mécanique intense de ce second mélange; et
- on ajoute au second mélange broyé le ou les composés ou éléments chimiques servant de supports pour obtenir un troisième mélange et on procède à un troisième broyage mécanique intense de ce troisième mélange.

14. Procédé selon l'une quelconque des revendications 1 à 10, **caractérisé en ce que**:
- le ou les composés ou éléments chimiques servant de supports sont ajoutés seulement lors de la seconde étape de lixiviation, cet ajout étant effectué à la solution de lixiviation; et
- la solution de lixiviation est soumise à une agitation mécanique, magnétique et/ou ultrasonique.

15. Procédé selon l'une quelconque des revendications 1 à 14, **caractérisé en ce que** le ou les composés ou éléments chimiques servant de support sont utilisés en quantité telle à présenter une concentration molaire supérieure à 50% dans le catalyseur supporté une fois fabriqué.

16. Un catalyseur supporté de structure nanocristalline, **caractérisé en ce que**:
- il possède une surface spécifique supérieure à 2 m²/g; et
- il est susceptible d'être préparé par un procédé selon l'une quelconque des revendications 1 à 15.

17. Usage d'un catalyseur supporté tel que défini dans la revendication 16, comme électrocatalyseur dans une pile à combustible.

18. Usage d'un catalyseur supporté tel que défini dans la revendication 16, comme électrocatalyseur dans un électrolyseur.

## Claims

1. Process for the preparation of a supported catalyst having a nanocrystalline structure and a high specific surface, comprising:
- in a first step, preparing a nanocrystalline material consisting of a metastable composite or alloy of at least two different chemical elements or compounds containing at least one catalytic species, the so-prepared material having a nanocrystalline structure with crystallites of a size lower than 100 nm; and
- in a second step, subjecting said nanocrystalline material to leaching with a leaching solution in order to eliminate totally or partially at least one of said elements or compounds of the material other than the said at least one catalytic species,
**characterized in that** at least one further chemical element or compound that is non-leachable and acts as a support for the catalytic species, is added to the material during the first step or to the leaching solution during the second step.

2. The process according to claim 1, **characterized in that** the at least one non-leachable element or compound acting as a support has a high specific surface and a good electronic conduction.

3. The process according to claim 1, **characterized in that** the at least one non-leachable element or compound acting as a support is selected from the group consisting of carbon black, graphite, doped zeolites, pyrolized polyacrylonitriles, carbides and oxides.

4. The process according to claim 1, **characterized in that** the at least one non-leachable element or chemical compound acting as a support has a high specific surface and a good ionic conduction.

5. The process according to claim 1, **characterized in that** the at least one non-leachable element or compound acting as a support is selected from the group consisting of conductive ionomeric polymers and ion-conducting ceramics.

6. The process according to claim 1, **characterized in that** said at least one non-leachable element or compound acting as a support is in the form of a powder, grid, lamella, film or plate.

7. The process according to any one of claims 1 to 6, **characterized in that** said at least one catalytic species contain at least one element selected from the group consisting of Pd, Pt, Ir, Os, Au, Rh, Ag, Ru and Ni.

8. The process according to any one of claims 1 to 7, **characterized in that**:
- the at least one element or compound leached in the second step comprises at least one non-metallic element selected from the group consisting of H, C, N, O, F, Cl, P and S; and
- the leaching of said at least one element or compound is carried out by thermal decomposition or by reaction with another phase.

9. The process according to any one of claims 1 to 7, **characterized in that**:
- the at least one chemical element or compound leached in the second step is selected from the group consisting of, on the one hand, Mg, Li, Na, K, Ca, Ti, Zr and Zn and, on the other hand, H, C, N, O, F, Cl, P and S; and
- the leaching of said at least one element or compound is carried out by thermal decomposition or by reaction with another phase.

10. The process according to any one of claims 1 to 9, **characterized in that** said at least. one leachable chemical element or compound has a molar concentration higher than or equal to 2% and lower than or equal to 95% with respect to all the chemical elements or compounds used in the process.

11. The process according to any one of claims 1 to 10, **characterized in that** in the first step, the nanocrystalline material is prepared in the form of a powder by mixing all the chemical elements or compounds used as starting materials, and subjecting all of said elements or compounds to a single intensive mechanical grinding.

12. The process according to any one of claims 1 to 10, **characterized in that**, in the first step:
- all the chemical elements or compounds used as starting materials are mixed together except said at least one element or compound acting as a support, in order to obtain a first mixture that is subjected to a first intensive mechanical grinding; and
- said at least one compound or element acting as a support is added to obtain a second mixture that is subjected to a second intensive mechanical grinding.

13. The process according to any one of claims 1 to 10, **characterized in that**, in the first step:
- all the chemical elements and compounds used as starting materials except said at least one element or compound acting as a support and said at least one leachable element or compound, are mixed together in order to obtain a first mixture that is subjected to a first intensive mechanical grinding;
- said at least one leachable element or compound is added to the first mixture that is obtained after grinding in order to obtain a second mixture that is subjected to a second intensive mechanical grinding; and
- said at least one element or compound acting as a support is added to the second mixture that is obtained after grinding in order to obtain a third mixture that is subjected to a third intensive mechanical grinding.

14. The process according to any one of claims 1 to 10, **characterized in that**:
- said at least one element or compound acting as a support is added only during the second step, said addition being made to the leaching solution; and
- the leaching solution is subjected to a mechanical, magnetic or ultrasonic stirring.

15. The process according to any one of claims 1 to 14, **characterized in that** said at least one element or compound acting as a support is used in such an amount that a molar concentration of said at least one element or compound acting as a support in the supported catalyst that is prepared, is higher than 50%.

16. A supported catalyst having a nanocrystalline structure, **characterized in that**:
- it has a specific surface higher than 2 m²/g; and
- it is susceptible of being prepared by the process of any claims 1 to 15.

17. Use of a supported catalyst as defined in claim 16, as an electrocatalyst in a fuel cell.

18. Use of a supported catalyst as defined in claim 16, as an electrocatalyst in an electrocatalyser.

## Patentansprüche

1. Verfahren zur Herstellung eines Katalysators, geträgert von einer nanokristallinen Struktur und mit großer spezifischer Oberfläche, worin:
- man in einem ersten Schritt ein nanokristallines Material herstellt, bestehend aus einem Verbundstoff oder einer metastabilen Legierung mindestens zweier Verbindungen oder chemisch verschiedener Elemente, enthaltend mindestens eine katalytische Spezies, wobei das so hergestellte Material eine nanokristalline Struktur mit Kristallen einer Größe kleiner als 100 nm aufweist; und
- man in einem zweiten Schritt das besagte nanokristalline Material einer Auslaugung durch eine Lösung zur Auslaugung unterwirft, um mindestens eine der besagten Verbindungen oder Elemente des Materials, anders als die katalytische(n) Spezies, teilweise oder vollständig zu eliminieren;
**dadurch gekennzeichnet, dass** die oder das mindestens eine nicht auslaugbare, chemische Verbindung oder Element, das zum Trägern der katalytischen Spezies dient, dem Material im ersten. Schritt oder der Auslauglösung im zweiten Schritt zugesetzt wird.

2. Verfahren nach Anspruch 1, **dadurch gekennzeichnet, dass** das oder die chemische(n) Verbindung(en) oder Element(e), die zum Trägern dienen, eine große spezifische Oberfläche und eine gute elektrische Leitfähigkeit aufweisen.

3. Verfahren nach Anspruch 1, **dadurch gekennzeichnet, dass** das oder die chemische(n) Verbindung(en) oder Element(e), die zum Trägern dienen, ausgewählt sind aus der Gruppe, bestehend aus Ruß, Graphit, dotiertemZeolith, pyrolysierten Polyacrylnitrilen, den Carbiden und Oxiden.

4. Verfahren nach Anspruch 1, **dadurch gekennzeichnet, dass** das oder die chemische(n) Verbindung(en) oder Element(e), die als Träger dienen, eine große spezifische Oberfläche und eine gute ionische Leitfähigkeit aufweisen.

5. Verfahren nach Anspruch 1, **dadurch gekennzeichnet, dass** das oder die chemische(n) Verbindung(en) oder Element(e), die als Träger dienen, ausgewählt sind aus der Gruppe, bestehend aus polymeren Ionenleitern und keramischen Ionenleitern.

6. Verfahren nach Anspruch 1, **dadurch gekennzeichnet, dass** das oder die chemische(n) Verbindung(en) oder Element(e), die als Träger dienen, in Form von Pulver, Gitter, Blättchen, eines Films oder von Plaques vorliegen.

7. Verfahren nach einem der Ansprüche 1 bis 6, **dadurch gekennzeichnet, dass** die eine oder die katalytischen Spezies, die verwendet werden, mindestens ein Element enthalten, ausgewählt aus der Gruppe, bestehend aus Pd, Pt, Ir, Os, Au, Rh, Ag, Ru und Ni.

8. Verfahren nach einem der Ansprüche 1 bis 7, **dadurch gekennzeichnet, dass**:
- das oder die chemischen Verbindungen oder Elemente, die in dem zweiten Schritt ausgelaugt werden, mindestens ein nicht-metallisches Element umfassen, ausgewählt aus der Gruppe, bestehend aus H, C, N, O, F, Cl, P und S; und
- die Auslaugung des oder der Elemente durch thermische Zersetzung oder Reaktion mit einer anderen Phase bewirkt wird.

9. Verfahren nach einem der Ansprüche 1 bis 7, **dadurch gekennzeichnet, dass**:
- das oder die chemische(n) Verbindung(en) oder Element(e), die in dem zweiten Schritt ausgelaugt werden, ausgewählt sind aus der Gruppe, bestehend zum einen aus Mg, Li, Na, K, Ca, Ti, Zr und Zn und zum anderen aus den nicht-metallischen Elementen H, C, N, O, F, Cl, P und S; und
- die Auslaugung des oder der Elemente durch thermische Zersetzung oder Reaktion mit einer anderen Phase bewirkt wird.

10. Verfahren nach einem der Ansprüche 1 bis 9, **dadurch gekennzeichnet, dass** das oder die auslaugbare(n) chemische(n) Verbindung(en) oder Element(e) in einer Molkonzentration oberhalb oder gleich 2 % und unterhalb oder gleich 95 % vorhanden sind, bezogen auf das Gesamte aller verwendeten chemischen Verbindungen oder Elemente.

11. Verfahren nach einem der Ansprüche 1 bis 10, **dadurch gekennzeichnet, dass** in dem ersten Schritt das nanokristalline Material in Form eines Pulvers hergestellt wird durch Mischen aller chemischen Verbindungen oder Elemente, die als Ausgangsprodukte verwendet werden, gefolgt von einer einzigen intensiven mechanischen Zerkleinerung.

12. Verfahren nach einem der Ansprüche 1 bis 10, **dadurch gekennzeichnet, dass** man in dem ersten Schritt:
- alle chemischen Verbindungen oder Elemente, die als Ausgangsprodukte verwendet werden, bis auf das oder die chemische(n) Verbindung(en) oder Element(e) mischt, die als Träger dienen, um eine erste Mischung zu erhalten, und man mit einer ersten intensiven mechanischen Zerkleinerung dieser ersten Mischung fortfährt; und
- man das oder die chemische(n) Verbindung(en) oder Element(e) zugibt, die als Träger dienen, um eine zweite Mischung zu erhalten, und man mit einer zweiten mechanischen intensiven Zerkleinerung dieser zweiten Mischung fortfährt.

13. Verfahren nach einem der Ansprüche 1 bis 10, **dadurch gekennzeichnet, dass** man in dem ersten Schritt:
- alle als Ausgangsprodukte verwendeten chemischen Verbindungen oder Elemente mischt bis auf das oder die chemischen Verbindungen oder Elemente, die als Träger dienen, sowie das oder die chemischen auslaugbaren Verbindungen oder Elemente zum Erhalt einer ersten Mischung, und man mit einer ersten mechanischen intensiven Zerkleinerung dieser ersten Mischung fortfährt; und
- man zur ersten zerkleinerten Mischung das oder die chemischen auslaugbaren Verbindungen oder Elemente hinzu gibt zum Erhalt einer zweiten Mischung und mit einer zweiten mechanischen intensiven Zerkleinerung der zweiten Mischung fortfährt; und
- man zu der zweiten zerkleinerten Mischung das oder die chemischen Verbindungen oder Elemente hinzu gibt, die als Träger dienen, zum Erhalt einer dritten Mischung und mit einer dritten mechanischen intensiven Zerkleinerung dieser dritten Mischung fortfährt.

14. Verfahren nach einem der Ansprüche 1 bis 10, **dadurch gekennzeichnet, dass**:
- das oder die chemische(n) Verbindung(en) oder Element(e), die als Träger dienen, nur während des zweiten Schritts der Auslaugung zugegeben werden, wobei diese Zugabe durch die Auslauglösung bewirkt wird; und
- die Auslauglösung einem mechanischen, magnetischen und/oder Ultraschallrühren unterworfen wird.

15. Verfahren nach einem der Ansprüche 1 bis 14, **dadurch gekennzeichnet, dass** das oder die chemische(n) Verbindung(en) oder Element(e), die als Träger dienen, in einer solchen Menge verwendet werden, dass sie in einer molaren Konzentration oberhalb von 50 % in dem einmal hergestellten geträgerten Katalysator vorhanden sind.

16. Katalysator, geträgert auf nanokristalliner Struktur, **dadurch gekennzeichnet, dass**:
- er eine spezifische Oberfläche oberhalb von 2 m²/g aufweist; und
- er über ein Verfahren gemäß einem der Ansprüche 1 bis 15 hergestellt werden kann.

17. Verwendung eines geträgerten Katalysators, wie er in Anspruch 16 definiert ist, als Elektrokatalysator in einem Verbrennungsreaktor.

18. Verwendung eines geträgerten Katalysators, wie er in Anspruch 16 definiert ist, als Elektrokatalysator in einem Elektrolysegerät.
